Europäisches Patentamt

European Patent Office

Office européen des brevets

(19)

(11) Veröffentlichungsnummer: **0 264 542**
**B1**

(12) **EUROPÄISCHE PATENTSCHRIFT**

(45) Veröffentlichungstag der Patentschrift:
02.05.90

(21) Anmeldenummer: 87108435.6

(22) Anmeldetag: 11.06.87

(51) Int. Cl.⁴: **F41F 1/00,** H02K 7/06, H02K 7/10

(54) Fremdangetriebene Maschinenwaffe.

(30) Priorität: 13.10.86 DE 3634815

(43) Veröffentlichungstag der Anmeldung:
27.04.88 Patentblatt 88/17

(45) Bekanntmachung des Hinweises auf die Patenterteilung:
02.05.90 Patentblatt 90/18

(84) Benannte Vertragsstaaten:
CH DE FR LI

(56) Entgegenhaltungen:
DE-A- 3 325 801
US-A- 3 005 357
US-A- 3 224 289
US-A- 3 648 561
US-A- 3 648 561

(73) Patentinhaber: Rheinmetall GmbH,
Ulmenstrasse 125 Postfach 6609,
D-4000 Düsseldorf(DE)

(72) Erfinder: Koine, Richard, Dieselstrasse 3,
D-4030 Ratingen(DE)

ACTORUM AG

## Beschreibung

Die Erfindung bezieht sich auf eine fremdangetriebene Maschinenwaffe mit den im Oberbegriff des Patentanspruches 1 angegebenen gattungsmäßigen Merkmalen.

Fremdangetriebene Maschinenwaffen, deren allgemeiner Aufbau und Funktion als bekannt vorausgesetzt werden, haben den Nachteil, daß der Motor und das dazugehörige Getriebe als peripher nacheinander geschaltete Anordnung einen erheblichen Platzbedarf beanspruchen und die Außenabmessungen der Maschinenwaffe z.T. erheblich vergrößern, was die Lafettierung einer solchen Waffe erschwert.

Aus der US-A 3 648 561 ist eine solche Maschinenwaffe bekannt, bei der innerhalb einer Steuerwalze ein Motor und ein Getriebe zum Antrieb der Steuerwalze angeordnet sind, so daß die Außenabmessungen dieser Waffe gegenüber bis dahin bekannten Waffen verringert ist. Nachteilig bei dieser Maschinenwaffe ist jedoch, daß Motor und Getriebe von der Steuerwalze als zusätzliche Hülle umschlossen werden, so daß das für diese Waffe erforderliche Bauvolumen noch nicht optimiert ist.

Es ist demnach Aufgabe der vorliegenden Erfindung, eine fremdangetriebene Maschinenwaffe mit einer die Verschlußbewegung steuernden Steuerwalze anzugeben, deren Außenabmessungen im Bereich der Steuerwalze in optimaler Weise verringert sind.

Diese Aufgabe wird erfindungsgemäß durch die Merkmale im kennzeichnenden Teil des Hauptanspruches gelöst. Die Erfindung geht hierbei von der Erkenntnis aus, daß sich bei solchen Maschinenwaffen der Umfang einer Steuerwalze bei konstruktiv vorgegebener Hublänge des Verschlusses bzw. des Patronenzuführschiebers ausschließlich nach den durch die Steigung der Steuerkurve bzw. Steuernut bedingten Kraftübertragungs- bzw. Beschleunigungsverhältnissen zwischen Steuerkurve der Steuerwalze und der darin eingreifenden Führungsrolle des Verschlusses richtet, wodurch eine natürliche Begrenzung in Richtung kleiner Durchmessergrößen der Steuerwalze gegeben ist.

Mit der erfindungsgemäßen Anordnung einer Steuerwalze, die selbst Teil eines Elektromotors ist, so daß ein zusätzliches Gehäuse für einen separaten Motor entfällt, wird sehr vorteilhaft eine in Kompaktbauweise ausgeführte fremdangetriebene Maschinenwaffe angegeben, die eine außerordentliche Volumen- und auch Gewichtsoptimierung ermöglicht, wobei gleichzeitig aufgrund der kurzen Kraftübertragungswege an das zu bewegende Maschinenteil, nämlich die Steuerwalze bzw. Trommel und den formschlüssig verbundenen Verschluß günstige Gestaltungsmöglichkeiten der abgeleiteten Kinematik gegeben sind.

Darüber hinaus bietet sich durch die Einbeziehung der Steuerwalze selbst als integriertes Bauteil des Elektromotors die erfindungsgemäße Ausführungsform für größere Maschinenwaffen mit hohen Leistungsanforderungen und großer Energieaufnahme an, wobei der Elektromotor die größtmögliche Bauausführung mit den Außenabmessungen der Steuerwalze erreicht.

Eine solche Waffe mit derartigem "zentralen" Antrieb kann aufgrund der günstigen Schwerpunktlage und formgünstigen Ausgestaltung wesentlich besser lafettiert werden. Die kurzen Übertragungswege bzw. die antriebsseitig kurze Formschlußkette sowie die Verringerung der zu bewegenden trägen Massen ergeben z.B. bezüglich einer Schußkontrolle bzw. eines Schnellstopps ein wesentlich verbessertes Anlauf- und Stoppvermögen der beweglichen Waffenteile.

In weiterer vorteilhafter Ausgestaltung der Erfindung ist vorgesehen, daß die innere Wicklung auf einer Welle drehbar innerhalb der mit der äußeren Wicklung versehenen Steuerwalze angeordnet ist, wobei die Welle über ein innerhalb der Steuerwalze angeordnetes, an einem gehäusefesten Achszapfen drehbar gelagertes Zwischenrad mit der Steuerwalze in Wirkverbindung steht. Durch diese Maßnahme wird eine optimale Raumausnutzung des Volumens der Steuerwalze bei hoher Regelbarkeit bzw. hoher Relativgeschwindigkeit der Wicklungen zueinander mit entsprechend geringer Umfangsgeschwindigkeit der Steuerwalze erreicht. Der Elektromotor ist bei optimierter Raumausdehnung leistungsstark ausgeführt, und das Getriebe ist auf ein einziges Zwischenrad mit geringem Raumbedarf minimiert. Mit der Zwischenschaltung des Zahnrades zwischen drehbar gelagerter Welle und drehbar gelagerter Steuerwalze wird also auf einfache und unkomplizierte Weise durch Verringerung des Getriebes auf ein Bauteil erreicht, daß bei hoher Motordrehzahl, nämlich von den beiden Wicklungen relativ zueinander, nur eine gedrosselte Drehzahl der Steuerwalze in gewünschter Größenordnung zur Vor- und Rücklaufbewegung des Verschlusses bereitgestellt wird.

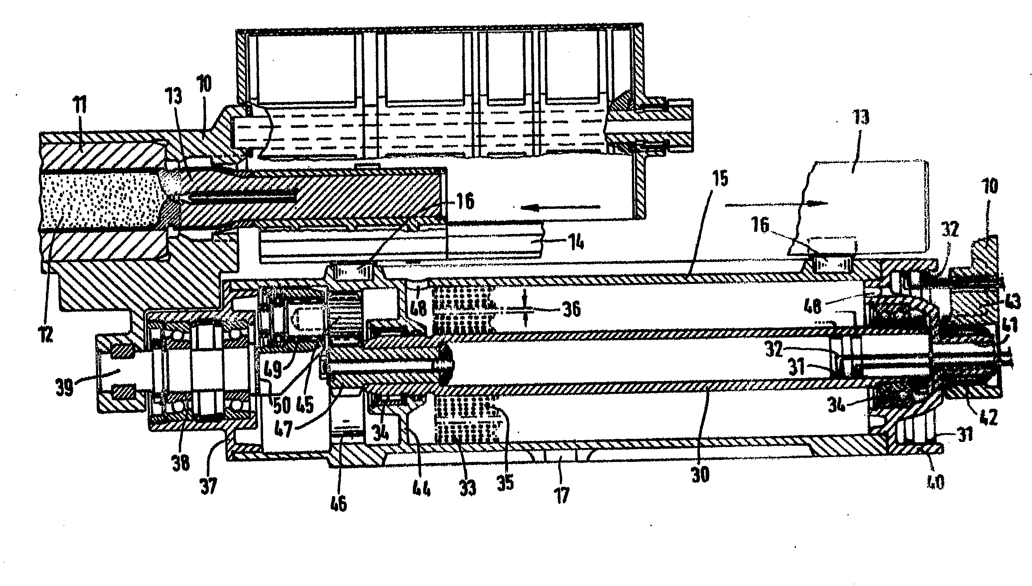

Die Erfindung wird nachfolgend anhand eines in der Zeichnung dargestellten Ausführungsbeispieles unter Beschränkung auf erfindungswesentliche Merkmale näher erläutert und beschrieben.

In der Figur ist mit der Bezugsziffer 10 das Waffengehäuse einer automatischen fremdangetriebenen Maschinenwaffe z.B. im Kaliber 35 bezeichnet. Das Waffengehäuse umschließt ein Rohr 11, von dem nur der hintere Teil des Patronenlagers mit einer darin eingeschobenen Patrone 12 ersichtlich ist. An das Waffenrohr 11 schließt sich nach hinten ein Drehverschluß 13 in Verriegelungsposition (vordere Rastposition) an. In verlängerter Rohrseelenachse ist im hinteren Waffenbereich weiterhin – nur teilweise angedeutet – die Hinterpartie des Drehverschlusses 13 in seiner hinteren Rastposition dargestellt. Der Drehverschluß 13 wird über Führungsschienen 14 längsverschiebbar im Waffengehäuse 10 geführt.

Unterhalb der Führungsschienen 14 für den Verschlußteil 13 ist im Waffengehäuse eine drehbare Steuerwalze 15 angeordnet. Zum Antrieb des Verschlusses bzw. zu seiner Linearverschiebung ist unten am Verschluß 13 eine Führungsrolle 16 vorgesehen, die in eine am äußeren Umfang der Steuerwalze 15 angeordnete endlose Steuernut 17 formschlüssig eingreift.

Da die Steuerwalze 15 selbst als Teil eines Elektromotors ausgebildet ist, ist an der Innenwandung der Steuerwalze 15 eine äußere Wicklung 33 und auf einer Welle 30 eine innere Wicklung 35 angeordnet, die durch einen schmalen Spalt 36 voneinander getrennt sind, und die bei Stromdurchfluß eine elektromotorische Kraft bewirken und Relativbewegungen (Rotationen) zueinander ausführen. Die auf der Zentralwelle angeordnete innere Wicklung wäre in dem Bereich der E-Motoren als Rotor und die äußere Wicklung in der Steuerwalze als Stator (der sich in dieser Ausführungsform auch dreht) zu bezeichnen.

Die Steuerwalze 15 ist auf ihrer vorderen Seite mit einem in einer vorderen Stirnscheibe 37 angeordneten Drehlager 38 drehbar auf einem waffengehäusefesten Achszapfen 39 gelagert. Auf ihrer rückwärtigen Seite weist die Steuerwalze 15 eine hintere Stirnscheibe 40 mit einem nach außen vorspringenden hohlen Drehzapfen 41 auf, der mittels eines Drehlagers 42 in einem gehäusefesten hinteren Lagerbock 43 drehbar befestigt ist. Zum Zwecke der Montage bzw. Demontage ist der Lagerbock 43 mittels eines Flansches lösbar am Waffengehäuse 10 angeflanscht. Die Welle 30 ist mittels in der hinteren Stirnscheibe 40 und in einer Zwischenwand 44 angeordneter Drehlager 34 drehbar koaxial innerhalb der Steuerwalze 15 angeordnet.

An dem nach hinten weisenden Ende des vorderen Achszapfens 39 ist mittels eines exzentrisch angeordneten Lagerbockes 50 mit Lager 49 ein Zwischenzahnrad 45 drehbar befestigt.

Das Zwischenzahnrad 45 kämmt mit einer Innenverzahnung 46 der Steuerwalze 15 und einem an der nach vorne weisenden Seite der Welle 30 befestigten Zahnrad 47 und stellt so eine formschlüssige Verbindung zwischen Steuerwalze 15 und Welle 30 (bzw. Rotor und Stator des Elektromotors) her, so daß die Steuerwalze mit ihrer Umfangsfläche und der darin eingearbeiteten Steuernut über die geregelt zugeführte Energie (elektrischer Strom) kontrollierte und steuerbare Rotationsbewegungen ausführt. Die elektrische Energieeinleitung in die äußere und die innere Wicklung 33, 35 erfolgt mittels Schleifkontakten 32 über Schleifringe 31, die innen an geschützter Stelle in den hinteren Endbereichen von Steuerwalze 15 und Welle 30 angeordnet sind. Die Zuleitungen von den Schleifringen 31 in die Wicklungen 33 und 35 sind durch besondere Bohrungen in der Welle 30 oder durch vorhandene Entlüftungsbohrungen 48 in der hinteren Stirnscheibe 40 geführt.

Mit dieser erfindungsgemäßen Ausführungsform der Steuerwalze als Teil des Elektromotors selbst — derartige Ausführungen von Elektromotoren mit rotierendem Außengehäuse sind an sich in der Fördertechnik unter der Bezeichnung Trommelmotoren bekannt — wird das in der Steuerwalze vorhandene bisher ungenutzte Volumen am optimalsten ausgenutzt, wobei eine größtmögliche Motorauslegung mit hoher Leistung realisiert werden kann.

**Patentansprüche**

1. Fremdangetriebene Maschinenwaffe mit einem Rohr (11), einem Waffengehäuse (10), einem Patronenzuführer und mit wenigstens einer einen Motor und ein Getriebe enthaltenden und von diesem angetriebenen, auf ihrer äußeren Umgangsfläche mit einer Steuernut (17) versehenen Steuerwalze (15), die über eine formschlüssige Verbindung richtungswechselnde Linearbewegungen eines Verschlusses (13) bzw. eines Patronenzuführschiebers veranlaßt, dadurch gekennzeichnet, daß die Steuerwalze (15) selbst nicht als ein Teil eines Elektromotors ausgebildet ist, wobei einerseits auf einer durchgehenden Welle (30) und andererseits an der Innenwandung der Steuerwalze (15) voneinander getrennte Wicklungen angeordnet sind.

2. Maschinenwaffe nach Anspruch 1, dadurch gekennzeichnet, daß die innere Wicklung (35) auf der Welle (30) drehbar innerhalb der mit der äußeren Wicklung (33) versehenen Steuerwalze (15) angeordnet ist.

3. Maschinenwaffe nach Anspruch 1 oder 2, dadurch gekennzeichnet, daß die Welle (30) über ein innerhalb der Steuerwalze (15) angeordnetes, an einem gehäusefesten Achszapfen (39) drehbar gelagertes Zwischenzahnrad (45) mit der Steuerwalze (15) in Wirkverbindung steht.

4. Maschinenwaffe nach einem der Ansprüche 1, 2 oder 3, dadurch gekennzeichnet, daß die Steuerwalze (15) auf ihrer in Gegenschußrichtung weisenden Rückseite ein hinteres Drehlager (42) der Steuerwalze (15) in einem demontierbaren, am Waffengehäuse (10) angeflanschten Lagerbock (43) angeordnet ist.

5. Maschinenwaffe nach einem der vorhergehenden Ansprüche 1 bis 4, dadurch gekennzeichnet, daß für die elektrische Energieübertragung in die rotierenden Wicklungen (33, 35) der Steuerwalze (15) und der Welle (30) an der Innenwandung der Steuerwalze (15) und an der Innenwandung der Welle (30) Schleifringe (31) vorgesehen sind, die mit waffengehäusefesten Schleifkontakten (32) in Verbindung stehen.

**Revendications**

1. Arme automatique à commande extérieure, comportant un tube (11) un boitier d'arme (10) et un alimentateur de cartouches, et au moins un cylindre de commande (15) comportant un moteur et une transmission, le cylindre de commande (15) étant entraîné par le moteur et étant muni sur sa surface périphérique extérieure d'une rainure de commande (17), et provoquant par l'intermédiaire d'une liaison par coopération de formes, des mouvements linéaires de sens alterné, d'une culasse (13) ou d'un poussoir d'alimentation de cartouches, caractérisée en ce que le cylindre de commande (15) est lui-même réalisé en tant que partie d'un moteur électrique, des enroulements séparés l'un de l'autre étant disposés d'une part sur un arbre traversant (30) et d'autre part sur la paroi intérieure du cylindre de commande (15).

2. Arme automatique selon la revendication 1, caractérisée en ce que l'enroulement intérieur (35) sur l'arbre (30) est disposé, rotatif à l'intérieur du cylindre de commande (15) portant l'enroulement extérieur (33).

3. Arme automatique selon la revendication 1 ou 2, caractérisée en ce que l'arbre (30) est en liaison fonctionnelle avec le cylindre de commande (15) par l'intermédiaire d'une roue dentée intermédiaire (45) disposée à l'intérieur du cylindre de commande (15) et montée, rotative sur un tourillon d'axe (39) solidaire du carter.

4. Arme automatique selon l'une des revendications 1, 2 ou 3, caractérisée en ce que le cylindre de commande (15) est disposé, par son côté arrière dans le sens opposé au tir, dans un palier de rotation arrière (42) du cylindre de commande (15), monté lui-même dans un bloc palier (43) démontable, bridé sur le boitier (10).

5. Arme automatique selon l'une des revendications 1 à 4, caractérisée en ce qu'on prévoit pour la transmission de l'énergie éléctrique dans les enroulements rotatifs (33, 35) du cylindre de commande (15) et de l'arbre (30), sur la paroi intérieure du cylindre de commande (15) et sur la paroi intérieure de l'arbre (30), des bagues glissantes (31), qui sont en liaison avec des contacts à frottement (32) solidaires du boitier.

**Claims**

1. Extraneously driven automatic weapon with a barrel (11), a weapon housing (10), a cartridge feed and at least one control roller (15) which contains a motor and a gearing and which is driven by the latter and which is provided on the peripheral surface with a control groove (17) and which through an interlock connection causes a breech (13) or a cartridge feed slide to perform linear movements in alternating directions, characterised by the fact that the control roller (15) is constructed as part of an electric motor with separate windings being provided on the one hand on a through-shaft (30) and on the other hand on the internal wall of the control roller (15).

2. Automatic weapon in accordance with Claim 1, characterised by the fact that the internal winding (35) is mounted on the shaft (30) in such a way as to be rotatable within the control roller (15) provided with the external winding (33).

3. Automatic weapon in accordance with Claim 1 or 2, characterised by the fact that the shaft (30) is operatively connected with the control roller (15) via an intermediate gear wheel (45) situated inside the control roller (15) and rotatably mounted on a journal (39) integral with the housing.

4. Automatic weapon in accordance with any one of Claims, 1, 2, 3, characterised by the fact that on the rear side of the control roller (15) facing in the opposite direction to the firing, a pivot (42) of the control roller (15) is provided in a removable bearing pedestal (43) flange-mounted on the weapon housing (10).

5. Automatic weapon in accordance with any one of the foregoing Claims 1 to 4, characterised by the fact that for the electrical transference of energy into the rotating windings (33, 35) of the control roller (15) and the inner wall of the shaft (30), the inner wall of the control roller (15) and the inner wall of the shaft (30) carry slip rings (31) in communication with sliding contacts (32) integral with the weapon housing.